# EUROPEAN PATENT SPECIFICATION

(11) **EP 2 366 156 B1**
(45) Date of publication and mention of the grant of the patent: **20.03.2013**
(21) Application number: 08875461.9
(22) Date of filing: 16.12.2008
(51) Int. Cl.: G06F 17/30

(54) **STRING MATCHING METHOD AND APPARATUS**
ZEICHENKETTENVERGLEICHSVERFAHREN UND VORRICHTUNG
PROCÉDÉ ET APPAREIL DE COMPARAISON DE CHAÎNES

(43) Date of publication of application: 21.09.2011
(73) Proprietor: Telefonaktiebolaget LM Ericsson (publ), 164 83 Stockholm (SE)
(72) Inventor: SZABO, Geza, H-6000 Kecskemet (HU); GODOR, István, H-1039 Budapest (HU); MALOMSOKY, Szabolcs, H-2000 Szentendre (HU); GYÖRI, Sandor, H-6080 Szabadszallas (HU)
(74) Representative: Brewer, Michael Robert
(86) International application number: PCT/EP2008/067660
(87) International publication number: WO 2010/069364

(56) References cited:
- US-A1- 2008 071 757
- ALBERT L. ZOBRIST: "A new hashing method with application for game playing" TECHNICAL REPORT #88, 1 April 1970 (1970-04-01), XP002536959 Wisconsin cited in the application

## Description

### Technical field

The present invention relates to a string matching method and apparatus, for example for use in classifying traffic travelling through a communications or computer network.

### Background

The aim of traffic classification is to find out what type of applications are run by the end users, and what is the share of the traffic generated by the different applications in the total traffic mix.

The most accurate traffic classification requires complete protocol parsing. However, in general, it would be difficult to implement every protocol which can occur in the network. In addition, even simple protocol state tracking can make the method so resource consuming that it becomes practically infeasible.

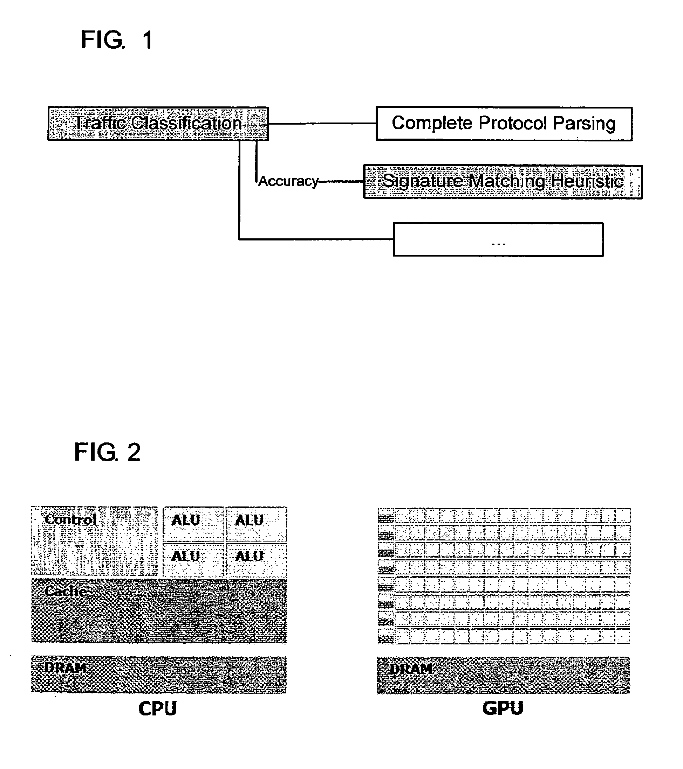

To make protocol recognition feasible, only specific byte patterns are searched in the packets in a stateless manner. These byte signatures are predefined to make it possible to identify particular traffic types, e.g., web traffic contains the string 'GET', eDonkey P2P traffic contains 'xe3x38'. These signature based heuristic methods require Deep Packet Inspection (DPI) meaning that in addition to the packet header they also need access to the payload of the packets. Especially in the case of well documented open protocols, this method can work well. This is depicted in Figure 1 of the accompanying drawings.

During DPI practically signature matching occurs. Two major distinct signature matching techniques can be found in literature.

The most common one is the usage of regular expressions. During regular expression matching a finite state machine (FSM) is created and according to the input, the states of the FSM are walked through. Matching occurs when it is possible to take defined legal steps in the case of every input character.

The advantages of regular expression matching are that: (a) it is possible to create complex matching structures, e.g. boolean 'and', 'or' operators; (b) it is possible to define special character subsets as well as the exact position in the searched string, etc.; (c) it gives exact (non-probabilistic) matching; and (d) the matching mechanism for one occurrence in the dictionary (FSM building, state walking) is computationally cheap.

On the other hand, the disadvantages are that: (a) the whole dictionary has to be stored; and (b) the matching mechanism has to be done for all elements of the dictionary which means that processing time scales linearly with the size of the dictionary.

The other common method is the bloom filter. The bloom filter is a space-efficient probabilistic data structure that is used to test whether an element is a member of a set (see e.g. hftp://en.wikipedia.org/wiki/Bloom_filter). The working mechanism of a bloom filter is: an exact input string is 'hashed' to an exact bitmask, which can be either found in the bloom filter or not.

The advantages of the bloom filter are: (a) low storage capacity is required; the required storage capacity does not scale with the number of elements; and (b) there are no false negatives.

The disadvantages of the bloom filter are: (a) false positives are possible; the more elements that are added to the set, the larger the probability of false positives; (b) elements can be added to the set, but not removed (though this can be addressed with a counting filter); (c) no wildcard support; in the case of wildcards or branches, all of the possible occurrences of the signature have to be enumerated and added to the bloom filter; the major side-effect of this that it increases the chance of false positives.

Wildcard support is needed for traffic classification. The following example shows why it is needed:
The Distributed Computing Environment / Remote Procedure Calls (DCE/RPC) consists of the following fields:
   RPC_MAJOR_VERSION, RPC_MINOR VERSION, RPC_TYPE, RPC_FLAGS, \x10\x00\x00\x00, etc.

In the Windows environment the RPC version numbers are the same thus can be regarded as fix header (fix values in fix positions), the type and flag fields are variables, thus can be represented as wildcards in an application signature. The following application signature can be created to match for the DCE/RPC calls of Windows:
\x05 \x00 ?? \x10 \x00 \x00 \x00,
where the "?" stands for the wildcard. The above signature can not be created and searched for without wildcard support.

Also, for traffic classification it is not sufficient to tell whether a string is found in the set of signatures, but the algorithm must tell which signature is matching.

Therefore the regular expression technique fits better for traffic classification. However, there are problems with applying regular expressions for traffic classification, and these are detailed below.

The most common technical implementation of string matching in practice is to use the general-purpose CPU (Central Processing Unit) for string matching.

There are several papers in the literature which deal with the problem of speeding up the string matching algorithm. There are hardware supported methods with FPGA, which speeds up hashing or using associative memory modules which is the physical manifestation of data-addressing which is 'simulated' algorithmically by hashing [S. Dharmapurikar, P. Krishnamurthy, T. Sproull and J. Lockwood: Deep packet inspection using parallel Bloom filters, Hot Interconnects, Stanford, CA, pp. 44-51, Aug. 2003]. There are methods from the field of medical or health research which search for e.g., repetition of known/unknown DNA structures in long DNA chains [M. C. Schatz and C Trapnell: Fast Exact String Matching on the GPU, http://www.cbcb.umd.edu/software/cmatch/Cmatch.pdf].

In today's commodity hardware the focus of development moves towards parallel architectures. It means that today's algorithms have to be altered from the usual sequential planning to exploit the power of multi-core architectures. Besides the general CPU element, every common computer has another powerful computation element, i.e. the video card(s) with 2D/3D support.

String matching can utilize the Graphical Processing Unit (GPU) [N.-F. Huang, H.-W. Hung, S.-H. Lai, Y.-M. Chu, W.-Y. Tsai: A GPU-Based Multiple-Pattern Matching Algorithm for Network Intrusion Detection Systems, Advanced Information Networking and Applications - Workshops, March 2008, Okinawa, Japan], which is specialized for intensive, highly parallel computation - exactly what graphics rendering is about - and therefore is designed such that more transistors are devoted to data processing rather than data caching and flow control, as schematically illustrated by Figure 2.

More specifically, the GPU is especially well-suited to address problems that can be expressed as data-parallel computations - the same program is executed on many data elements in parallel with high arithmetic intensity (the ratio of arithmetic operations to memory operations).

Data-parallel processing maps data elements to parallel processing threads. Many applications that process large data sets such as arrays can use a data-parallel programming model to speed up the computations.

A problem identified by the present applicant with applying regular expressions for traffic classification will now be explained. The problem generally concerns the access time of the different memory types varies according to the distance of the CPU. The final computation is always done in the registers of the CPU but it takes hundreds of CPU cycles to move the data from one place to another. To speed up processing, all examined data (both the protocol dictionaries and the examined payloads) has to be as close to the CPU as possible. A general CPU does several other tasks for the operating system and for other system or user programs thus it is difficult to determine the exact place of the data during the processing. Since it is frequently accessed, it is preferred to keep the dictionary continuously close to the CPU and to ensure that its size is as low as possible. In general it has been appreciated that it is advisable to make all the necessary computations on entities being as close to each other as possible (either in the registers or cache or operative memory).

The signature database of the common regular expression method is hard to fit into memories close to the CPU. Thus frequent data moving is needed between the different registers, caches or operative memory. The result is that the CPU has to wait for these and cannot proceed with useful arithmetic operations.

In the paper [S. Dharmapurikar, P. Krishnamurthy, T. Sproull and J. Lockwood: Deep packet inspection using parallel Bloom filters, Hot Interconnects, Stanford, CA, pp. 44-51, Aug. 2003] the authors use FPGAs to accelerate string matching with dedicated hardware. FPGAs are difficult to modify and add new signatures and functions.

In the papers [N.-F. Huang, H.-W. Hung, S.-H. Lai, Y.-M. Chu, W.-Y. Tsai: A GPU-Based Multiple-Pattern Matching Algorithm for Network Intrusion Detection Systems, Advanced Information Networking and Applications - Workshops, March 2008, Okinawa, Japan] and [N. Jacob, C Brodley: Offloading IDS Computation to the GPU, ACSAC '06: Proceedings of the 22nd Annual Computer Security Applications Conference on Annual Computer Security Applications Conference, 2006, Washington, DC, USA] the authors use previous generations of videocards and go to lengths to utilize their capacity somehow. In those days, videocards were dedicated to video related calculations and could not be used as a general-purpose computation unit. The authors had to create datasets which could fit into textures, such a data structure which the GPUs could work with anyhow. The communication between the host and the device was inefficient.

Today's GPUs are different. As an example, consider nVIDIA's series 8 GPUs, which recently developed from the specific purely video related functional units (pixel shaders, vertex shaders) into a homogeneous collection of universal floating point processors (called "stream processors") that can perform a set of more universal tasks.

In the paper [M. C. Schatz and C Trapnell: Fast Exact String Matching on the GPU, http://www.cbcb.umd.edu/software/cmatch/Cmatch.pdf] the authors use the GeForce 8 series to do exact string matching on bacterial genomes. Their input data consisted of long string streams, and their requirements did not contain that the string matching algorithm should support wildcards. This is a major functional drawback when this method would be applied to protocol signature matching.

US 7225188 B1 describes a pattern matching engine operation method for processing network messages, involves determining sub-expressions that match string and executing action associated with that regular expression on network message. The abstract reads: "The borders separating each regular expression into several sub-expressions are identified. The sequential characters from the sub-expressions are loaded into each entry of the pattern matching engine. The string from the network message is applied to the entries of the engine to search the string, simultaneously, in parallel with all the sub-expressions. The sub-expressions that match the string are determined. The action associated with the regular expressions corresponding to the matching sub-expressions is executed on the network message."

This method is based on expensive associative (content-addressable) memory. Today's off-the-shelf PCs have no programmable external associative memory card (apart-from the L1/L2 cache which is not directly accessible by the programmer).

US 20080046423 A1 describes a patterns occurrence detecting method for e.g. string of text in data mining, involves receiving input stream, and transitioning between states of deterministic finite state automaton associated with patterns and transitions. The abstract reads: "The method involves receiving an input stream, and transitioning between states of a compressed deterministic finite state automaton (DFA) associated with the patterns and transitions based on characters of the stream. The transitioning step comprises comparing the characters to the transitions of the DFA to find a matching transition. A current state of the DFA is updated to a state associated with the matching transition, and the detected patterns associated with the matching transition are outputted. The updating and outputting steps are repeated and compared over a length of the stream."

This is an extension of regular expression based string matching, thus does not fit into GPU architecture.

US 20060259498 A1 describes a signature appearance detecting method for e.g. personal computer, involves detecting substring location of any substring from among set of substrings in source, where each of substrings appears in signatures. The abstract reads: "The method involves detecting a substring location of any substring from among a set of substrings in a source, where each of the substrings appears in signatures. The detected substring locations of the substrings are used to detect a signature location of a signature from the signatures. Information regarding the signature location is provided to a user. The signature that has been detected in the source is determined if a walker position indicates an end position of a path corresponding to the signatures."

This method works on general purpose CPU and not aimed at working on dedicated hardware like GPU.

US 20030229708 A1 describes a pattern matching engine for use with network device e.g. router, has rake execution engine that identifies potential matches between known signatures and incoming Internet protocol data stream. The abstract reads: "A rake execution engine determines a potential pattern match between the incoming Internet protocol (IP) data stream and prestored signatures read from a database. A ruler execution engine determines an exact pattern match from the potential pattern match."

This method is a framework and shows how to utilize string matching in network applications. It does not aim at implementation issues on dedicated hardware.

WO 2006096657 A2 describes a packet processing system, has graphics processing unit coupled to central processing unit, where graphics processing unit is utilized to provide parallelized operations on packet data. The abstract reads: "The system has a graphics processing unit (GPU) coupled to a central processing unit (CPU). The graphics processing unit is utilized to provide parallelized operations on packet data. Compute nodes in the graphics processing unit are instructed to execute programs that extract required fields of data from the packet data and to perform lookups in the database to find appropriate longest prefix match."

The patent describes the utilization of GPU as a general idea. There is no specific information about how this should be efficiently done, what kind of data structures fit well for this architecture, and so on.

It is desirable to address the above-identified issues.

### Summary

According to a first aspect of the present invention there is provided a method of encoding a signature string that is to be searched for within a search string, each character in the search string being one of n characters of an alphabet and each character in the signature string being one of the n characters or a wildcard character, the method comprising: encoding the signature string into a first part and a second part with reference to a dictionary comprising a plurality of codes, the first part identifying which, if any, characters of the signature string are wildcard characters, and the second part being formed by, for each character in the signature string that is not a wildcard character, retrieving a code from the dictionary based on the character and its position within the signature string, the dictionary holding a different code for each such character-position pairing, and combining the retrieved codes according to a predetermined logical operation to form the second part.

The predetermined logical operation may be an XOR operation.

The codes held in the dictionary may be allocated substantially randomly or pseudo-randomly to the various character-position pairings.

The first part may be represented by a number of binary bits equal to the number of positions within the signature string, with each bit set to 0 or to 1 according to whether or not the character within the signature string at a corresponding position in the signature string is a wildcard character.

The number of character positions in the signature string may be the same as the number of character positions in the search string.

Each code may be represented by *m* binary bits, where *m*≤ *p* log₂*n*, and where *p* is the number of positions within the signature string. It may be that *m* = *p* log₂*n*.

According to a second aspect of the present invention there is provided a method of searching for a signature string within a search string, each character in the search string being one of n characters of an alphabet and each character in the signature string being one of the n characters or a wildcard character, the method comprising: (a) receiving a version of the signature string encoded using a method according to the first aspect of the present invention so as to comprise the first and second parts; (b) for each character of the search string whose position is not indicated by the first part of the encoded signature string as holding a wildcard character in the signature string, retrieving a code from the dictionary based on the character and its position within the search string; (c) combining the codes according to the predetermined logical operation to form an encoded search string; and (d) determining whether the signature string is present in the search string based on a comparison between the encoded search string and the second part of the encoded signature string.

According to a third aspect of the present invention there is provided a method of searching for a signature string within a plurality of search strings or a string made up of a plurality of such search strings, comprising using a corresponding plurality of parallel processing threads in a Single Instruction Multiple Data architecture processor, each parallel processing thread performing at least steps (a) to (c) of a method according to the second aspect of the present invention in relation to a different one of the plurality of search strings.

The processor may be a Graphical Processing Unit of a computer system also comprising a Central Processing Unit.

The method may comprise holding the dictionary and the encoded version of the signature string in a memory space of the processor that is cached, and holding the search strings in a memory space of the processor that is not cached.

According to a fourth aspect of the present invention there is provided a method of classifying traffic travelling in from a communications or computer network, the traffic comprising a plurality of messages, and the method comprising, for each of at least one of the messages, using a method as claimed in any preceding claim to search within the message for a signature string associated with an application, and classifying the message as being associated with that application if the signature string is found in the search.

According to a fifth aspect of the present invention there is provided an apparatus for encoding a signature string that is to be searched for within a search string, each character in the search string being one of n characters of an alphabet and each character in the signature string being one of the n characters or a wildcard character, the apparatus comprising: means for encoding the signature string into a first part and a second part with reference to a dictionary comprising a plurality of codes, the encoding means comprising first means for forming the first part identifying which, if any, characters of the signature string are wildcard characters, and the second part being formed by, for each character in the signature string that is not a wildcard character, retrieving a code from the dictionary based on the character and its position within the signature string, the dictionary holding a different code for each such character-position pairing, and combining the retrieved codes according to a predetermined logical operation to form the second part.

According to a sixth aspect of the present invention there is provided an apparatus for searching for a signature string within a search string, each character in the search string being one of n characters of an alphabet and each character in the signature string being one of the n characters or a wildcard character, the apparatus comprising: (a) means for receiving a version of the signature string encoded using a method according to the first aspect of the present invention so as to comprise the first and second parts; (b) means for, for each character of the search string whose position is not indicated by the first part of the encoded signature string as holding a wildcard character in the signature string, retrieving a code from the dictionary based on the character and its position within the search string; (c) means for combining the codes according to the predetermined logical operation to form an encoded search string; and (d) means for determining whether the signature string is present in the search string based on a comparison between the encoded search string and the second part of the encoded signature string.

According to a seventh aspect of the present invention there is provided a program for controlling an apparatus to perform a method according to any of the first to fourth aspects of the present invention or which, when loaded into an apparatus, causes the apparatus to become an apparatus according to the fifth or sixth aspect of the present invention. The program may be carried on a carrier medium. The carrier medium may be a storage medium. The carrier medium may be a transmission medium.

According to an eighth aspect of the present invention there is provided an apparatus programmed by a program according to the third aspect of the present invention.

According to a ninth aspect of the present invention there is provided a storage medium containing a program according to the third aspect of the present invention.

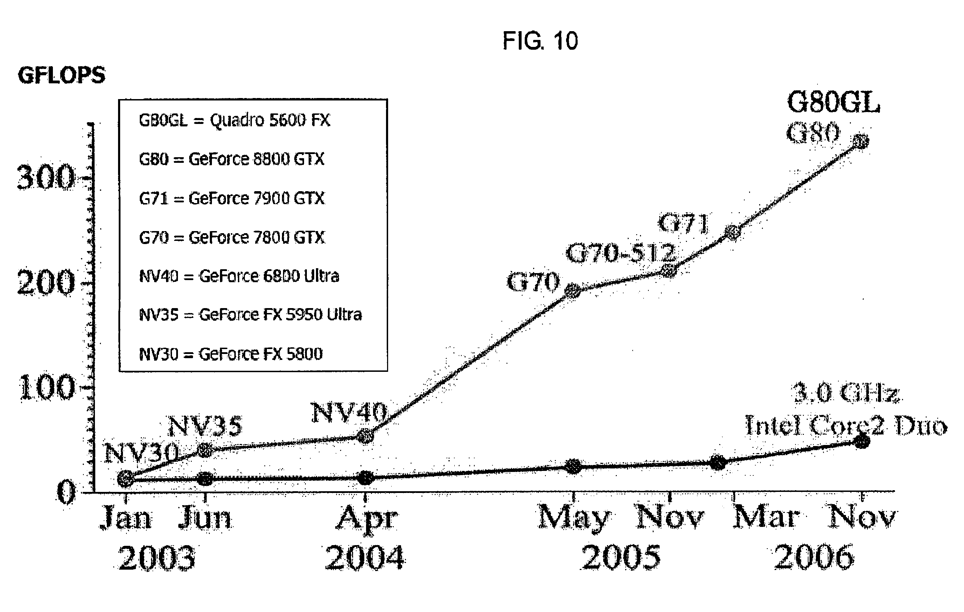

The built-in high capacity video cards in today's commodity hardware are idle during DPI, thus make these very powerful computational units utilizable and can be even faster for specific applications than general-purpose CPUs as it is illustrated in Figure 10 of the accompanying drawings. Based on this, an embodiment of the present invention offers at least one of the following advantages:
• Current GPUs scales better to the sum of data than any other general-purpose CPU.
• Due to the Single Instruction Multiple Data (SIMD) architecture the signature matching works for several thousands of packets parallel in few clock cycles comparing to methods on general-purpose CPU doing the same task with several orders of magnitudes more CPU cycles.
• Beside the architectural and programming conceptual differences between the CPU and GPU, a third big issue is that the programmer can explicitly determine the location of the data structures in the different memory types of the video card which otherwise is in the hand of the operating system in the case of general CPU based architectures.
• The signature matching is an asynchronous process, it does not cause load on the host CPU which can do any other task during signature matching.
• The proposed construction provides that the size of the dictionary can be compressed and pre-calculated.
• The data structure and implementation proposal fits into current GPU architecture → easy and efficient usage.

### Brief description of the drawings

Figure 1, discussed hereinbefore, illustrates schematically how the signature matching heuristic is a preferred method in previously-considered traffic classification techniques;
Figure 2, also discussed hereinbefore, is a schematic illustration of the share of transistors dedicated for specific tasks of the CPU vs the GPU;
Figure 3 provides a schematic summary of the context behind an embodiment of the present invention;
Figure 4 illustrates schematically the working mechanism of the signature matching method and the place of the data structures in the GPU memory model according to an embodiment of the present invention;
Figure 5 is a schematic flow chart illustrating a method according to an embodiment of the present invention for encoding a signature string that is to be searched for within a subsequently-received search string;
Figure 6 illustrates schematically an apparatus for performing the method of Figure 5;
Figure 7 is a schematic flow chart illustrating a method according to an embodiment of the present invention finding a signature within a received search string;
Figure 8 illustrates schematically an apparatus for performing the method of Figure 7;
Figure 9 illustrates the size of alphabet-position dictionary as a function of the length of signatures; and
Figure 10, also discussed hereinbefore, illustrates how Floating-Point Operations per Second has evolved over time for the CPU and GPU.

### Detailed description

To address the problems with known technique as identified and explained above, an embodiment of the present invention aims to offload the CPU during the most processor demanding method of traffic classification by pushing the DPI tasks onto the GPU. The GPU is capable of handling well parallelized tasks efficiently and in current hardware configuration they are idle during traffic classification. The advantage of utilizing the GPU is that it can do the DPI asynchronously from the other tasks of the CPU.

To utilize the GPU efficiently a well suited data structure and algorithm is needed. Accordingly, in an embodiment of the present invention, string matching in a general-purpose CPU is transformed into an encoding task with arithmetic operations which can be done efficiently on the GPU. An embodiment of the present invention includes an algorithm and data structure extending the idea of Zobrist hashing [Zobrist, Albert L. A Hashing Method with Applications for Game Playing, Tech. Rep. 88, Computer Sciences Department, University of Wisconsin, Madison, Wisconsin, 1969]. A method embodying the present invention works by encoding the application signatures to fit into the cached memory of the GPU resulting in well-utilization of the GPU cycles. A method embodying the present invention supports wildcard usage and packet length examination.

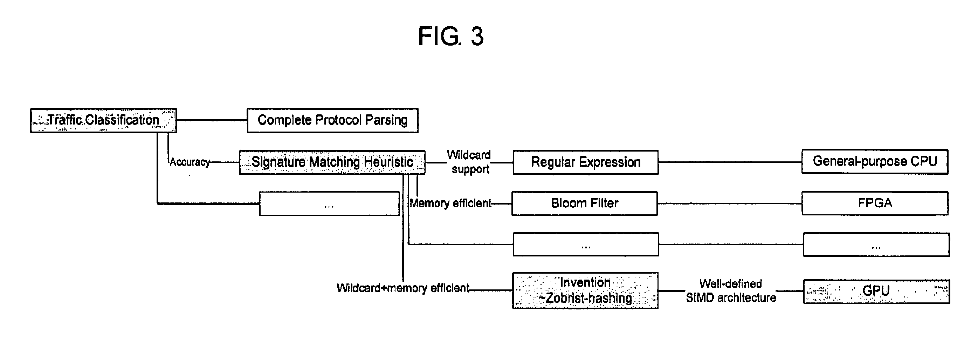

The shaded boxes in Figure 3 schematically show how a method embodying the present invention for traffic classification utilizing GPUs fits alongside previously-proposed techniques, with the main arguments supporting the reasons of choices made are written on the lines interconnecting the boxes.

In the case of DPI, there are several requirements compared to general string matching which can be exploited:
• The dictionary of the protocols is fixed, no need for approximate matching.
• The input where the search is done is a fixed set of bytes with a maximum length around the Maximum Transmission Unit (however, the average packet size is much lower than the Maximum Transmission Unit or MTU). The protocol headers can be usually found in the first few bytes.
• One matching is enough for the check of existence, there is no need to enumerate all possible matches in the input string.
• Wildcard support is needed
• The method should support that the packet length can be also the subject of examination

An embodiment of the present invention proposes that DPI methods should utilize the computing resources of the GPU. To efficiently do this, proper data structures are needed that fit into the processor cache to maximize the GPU cycles spent on arithmetic operations comparing to memory accessing operations.

The idea of the proposed data structure is similar to the Zobrist hashing (see http://en.wikipedia.org/wiki/Zobrist_hashing or [Zobrist, Albert L. A Hashing Method with Applications for Game Playing, Tech. Rep. 88, Computer Sciences Department, University of Wisconsin, Madison, Wisconsin, 1969]). In our proposal the major difference comparing to the original algorithm is that it has been extended by a bitmask which stores the position of the wildcard characters of the application signatures.

The proposed data structure consists of a dictionary of the input characters. This dictionary encodes the alphabet according to their place in the searched string. Thus the dictionary is a matrix in which the rows are the different characters of the alphabet; the columns represent the different positions of the input word. Each element of the matrix is assigned a random number. The domain of the random numbers would preferably overwhelm the size of the dictionary to avoid/minimize collision later.

The following shows an example of the above discussed alphabet-position dictionary:

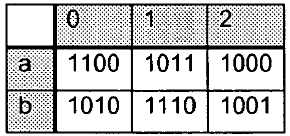

The following shows an example input application signature dictionary for four applications:

| |
|---|
| a*b |
| aaa |
| *a* |
| **a |

Each application signature is encoded. There is a bitmask for each signature which indicates whether for a given position the input character is a wildcard or not. The following shows an example bitmask for the application signatures shown above:

| | |
|---|---|
| a*b | 101 |
| aaa | 111 |
| *a* | 010 |
| **a | 001 |

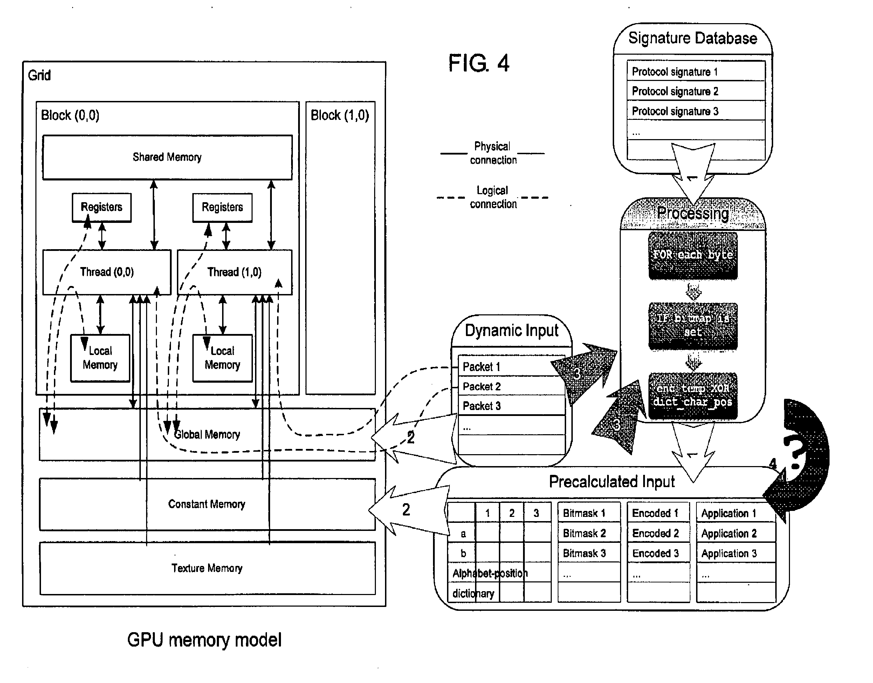

There is another value in the data structure for each signature, the final value of the encoding. To gain the final encoded value of each protocol signature the encoding is done in the following way (Step 1 of Figure 4):
1. The temporary final encoded value is set to 0
   -> R=0;
2. REPEAT on all character of the signature; ->X [j]
3. IF (X[j] == wildcard character) THEN
   {
   a zero is written in the referring position of the bitmask
   -> B[j]=0;
   }
4. ELSE
   {
   the bit is set to 1 in the referring position of the bitmask
   -> B[j]=1;
   the value of the alphabet-position dictionary is searched for the specific character on the specific position
   -> lookup dict [X[j] ] [j] ;
   the found value is XORed to the temporary final encoded value
   -> R = R XOR dict [X [j] ] [j]
   }
5. END
6. Finishing with all the characters, the final encoded value is the temporary encoded value. -> return R;

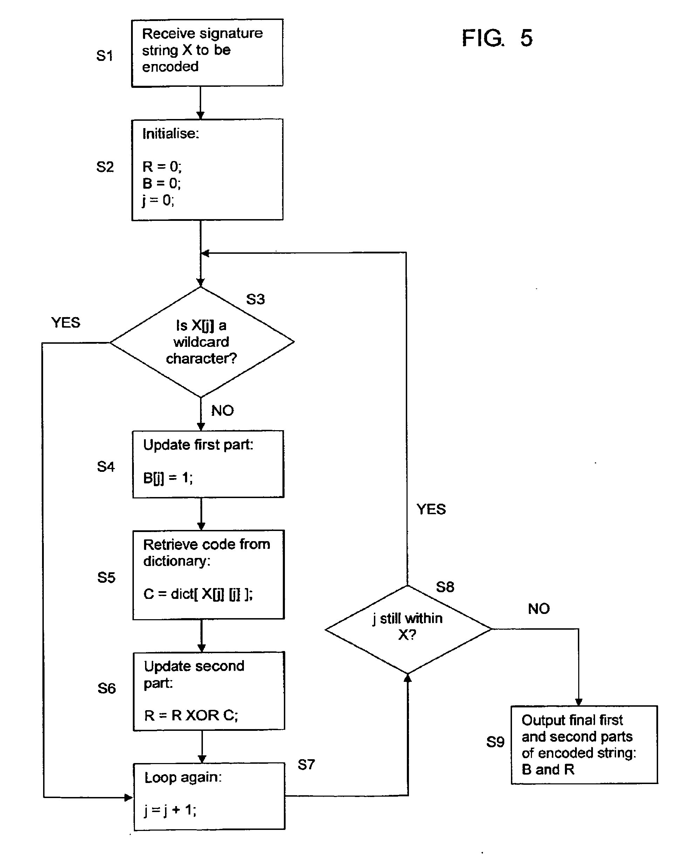

This method is illustrated schematically in the flow chart of Figure 5, which is a method according to an embodiment of the present invention for encoding a signature string that is to be searched for within a subsequently-received search string. The signature X will be encoded into a first part B and a second part R with reference to a dictionary comprising a plurality of codes.

The signature string X is received in step S1. In step S2, R and B are each initialised to 0, and an index variable j is also initialised to 0.

In step S3 it is checked whether X[j] (the character at position j of X, represented as an array) is a wildcard character. If so, processing passes to step S7, which is described below. If not, in step S4 the first part B is updated by changing the bit at position j to 1 to indicate that this position does not correspond to a wildcard character. In step S5 a code C is retrieved from the dictionary based on the character at position j (X[j]) and its position (j) within the signature string X. Then in step S6 the second part R is updated by XOR'ing it with the retrieved code C.

In step S7 the loop index variable j is incremented. In step S8 it is checked whether the index variable j is still within the bounds of the string X. If so, processing passes back to step S3. If not, the method terminates in step S9 by outputting the final values for the first and second parts B and R of the encoded signature string.

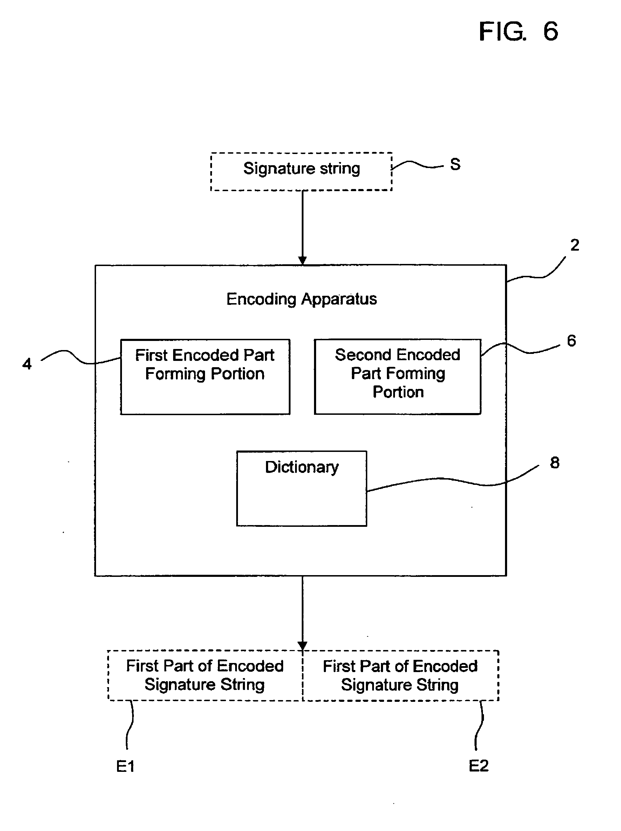

Figure 6 illustrates schematically an encoding apparatus 2 for performing the method of Figure 5, and more specifically for encoding a signature string S that is subsequently to be searched for within a search string. The apparatus 2 comprises a first portion 4 for encoding the signature string S into a first part E1 and a second portion 6 for encoding the signature string S into a second part E2, with reference to a dictionary 8 comprising a plurality of codes. The signature string S corresponds to X from Figure 5. The first part E1 corresponds to B in the method of Figure 5, while the second part E2 corresponds to R from Figure 5. In accordance with what is described with reference to Figure 5, the first part E1 is formed so as to identify which, if any, characters of the signature string S are wildcard characters. The second part E2 is formed by, for each character in the signature string S that is not a wildcard character, retrieving a code from the dictionary 8 based on the character and its position within the signature string S (the dictionary holds a different code for each such character-position pairing). The retrieved codes are combined according to an XOR logical operation to form the second part E2.

Taking as an example the values in the above-described example alphabet-position dictionary, application signature dictionary, and application signature bitmask, the encoded signature database would be calculated as follows:
• a*b is encoded into: 1100 XOR 1001 = 0101
• aaa is encoded into: 1100 XOR 1011 XOR 1000 = 1111
• *a* is encoded into: 1011
• **a is encoded into: 1000

Thus the encoded signature database would be as follows:

| |
|---|
| 0101 |
| 1111 |
| 1011 |
| 1000 |

Each signature is encoded into a bitmask (first part) and a specific bit signature (second part). These are those data structures together with the alphabet-position dictionary which have to be kept close to the CPU. A specific implementation example is provided by way of illustration:
• The alphabet-position dictionary was chosen 16 wide (16 columns) and 256 tall (256 rows) containing all the possible ANSI character values (1 byte long). Each field is assigned with a random 4 byte number (0- 4,294,967,295).
• The bitmask is 16 bit long thus it can be represented in 2 bytes (0-65,535). The size of the array of bitmasks is the same as the number of input signatures.
• The final value is the same size as one element of the alphabet-position dictionary. The size of the array of encoded values is the same as the number of input signatures.

During the signature matching procedure the same general process as described above is repeated, with each searched string being encoded according to the different bitmasks and compared the encoded code to the previously determined one (Step 3, Step 4 of Figure 4). In one specific implementation the encoded signature array is two dimensional, and the second value for an encoded signature represents an application specific number, e.g. the default port of the application to make it possible to determine the application in one step after successful matching.

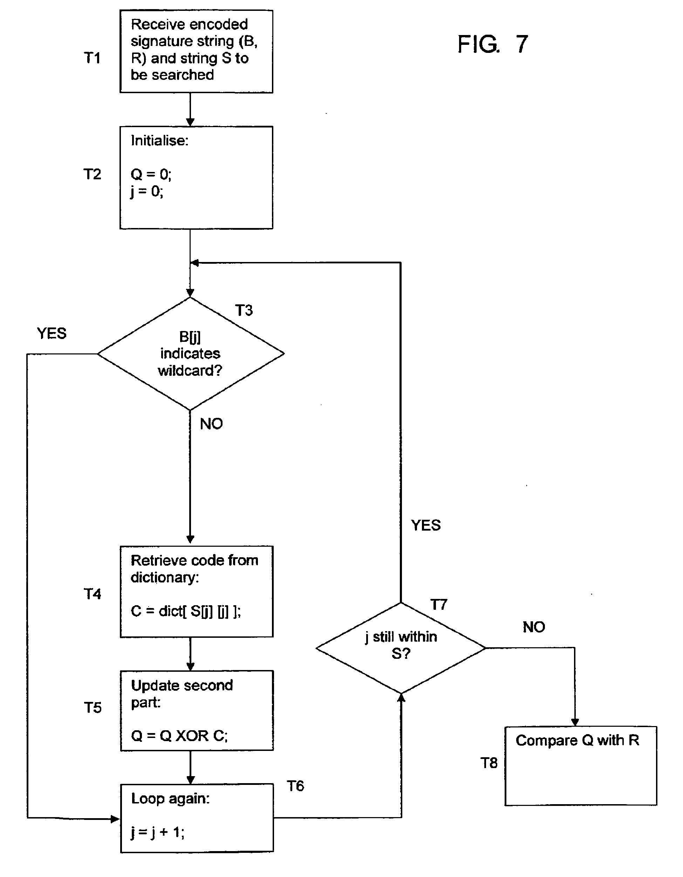

The signature matching procedure is illustrated schematically in Figure 7. It will be apparent that the signature matching procedure uses an encoding method that is generally equivalent to that illustrated in Figure 5, except that it is the search string that is encoded rather than the signature string. Also the bitmask (first part) B from the encoded signature string is used rather than derived (it is used to determine where the wildcard characters are).

The search string S is received in step T1. The search string S will, in subsequent steps, be encoded into a code Q, which is equivalent to what was called the second part above with reference to Figure 4, with reference to the same dictionary of a plurality of codes.

In step T2, Q and the index variable j area initialised to 0.

In step T3 it is checked whether B[j] indicates the character at position j of the non-encoded signature string X as being a wildcard character. If so, processing passes to step T6, which is described below. If not, in step T4 a code C is retrieved from the dictionary based on the character at position j (S[j]) and its position (j) within the search string S. Then in step T5 the code Q is updated by XOR'ing it with the retrieved code C.

In step T6 the loop index variable j is incremented. In step T7 it is checked whether the index variable j is still within the bounds of the search string S. If so, processing passes back to step T3. If not, processing passes to step T8.

In step T8 the derived code Q is compared with the second part R of the encoded signature string received in step T1. If there is a match, then it has been determined that the signature string X is present within the search string S.

The input string may be made up of a plurality of search strings (for example a message made up of a plurality of packets), and if so then the method of Figure 7 would be repeated (preferably in parallel) for each such search string, although a single match in step T8 is all that is required. Likewise, for a database of signature strings, the method would be repeated for each signature string in the database, or at least as many as required.

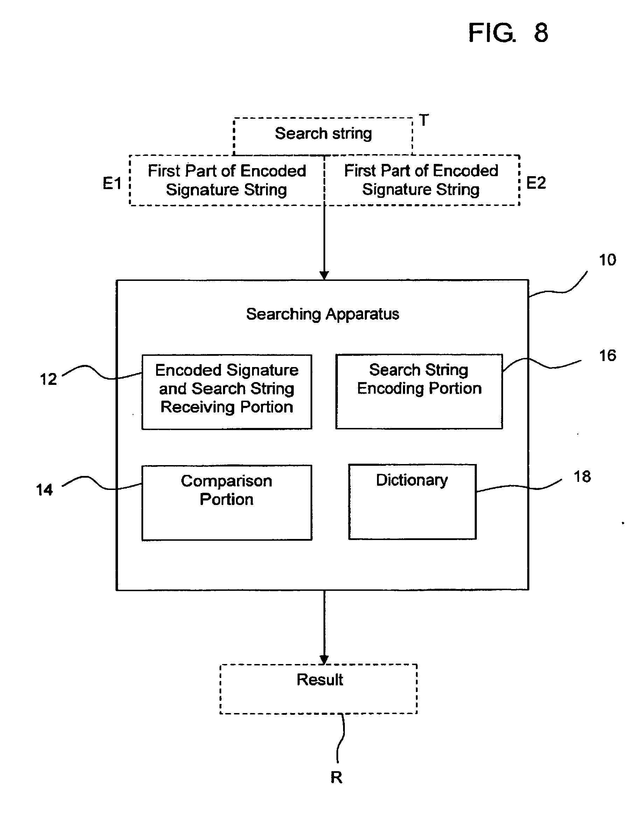

Figure 8 illustrates schematically a string matching apparatus 10 for performing the method of Figure 7, and more specifically for searching for a signature string S within a search string T. The apparatus 10 comprises a portion 12 for receiving the search string T and a version of the signature string S encoded using a method according to that described above with reference to Figures 5 and 6 so as to comprise first and second encoded parts E1 and E2. A further portion 16 is adapted to encode the received search string T by, for each character of the search string T whose position is not indicated by the first part E1 of the encoded signature string S as holding a wildcard character in the signature string S, retrieving a code from a dictionary 18 (holding the same information as the dictionary 8) based on the character and its position within the search string T. The portion 16 is further adapted to combine the retrieved codes according to the XOR logical operation to form an encoded search string. Finally, a portion 14 is adapted to determine whether the signature string S is present in the search string T based on a comparison between the encoded search string and the second part E2 of the encoded signature string S.

To support the examination of payload length, the data structure can be extended by encoding the length of the payload as a character in the application signature and sign in the bitmask that the character in the specific position has to be taken into account. In our implementation the size of the packet is represented on 1 byte - it could be the size of the MTU ∼ 1500 byte, but the control traffic which is the derivation of the packets with fixed length is much lower - on the last position of the application signature. E.g., if aaa is known to be 3 byte long, than 011 (3) is XORed to its encoded value in the last step 1111 XOR 0011 = 1100, and the bitmask is changed into 1111.

On the GPU each thread deals with the content of one packet. Figure 4 shows the place of data structures in the GPU memory model.

The global memory space is not cached, so it is important to follow the right access pattern to get maximum memory bandwidth, especially given how costly accesses to device memory are. However, the global memory space which is readable-writeable and practically all of the device memory is this type of memory (512 Mbyte in nVidia 8800 GTS) which can be filled with Dynamic Input data which is the array of packets in the present case (Figure 4, Step 2). During the initialization of each thread the referring array of the packet bytes are copied from the global memory to the registers or to the local memory of the thread thus repeating the arithmetic calculations with the same data is not slowed down by accessing the global memory. If we consider the example implementation where every packet is stored as a 30 byte long array, about 18 million packets fit into the 512 Mbyte memory of the nVidia 8800 GTS.

The constant memory space is cached so a read from constant memory costs one memory read from device memory only on a cache miss, otherwise it just costs one read from the constant cache. The pre-calculated input data structures are loaded into the constant memory space. It is important to note that the compression of the signature database was necessary to fit into this memory. The allocable constant memory size is 64 Kbyte for the whole kernel in CUDA 1.1. If the example implementation is considered where the signature database consists of 4 byte long values, then about 10 thousands of signatures fit into the constant memory (The 256*20=5120 bytes of the alphabet-position dictionary have been calculated into the constant memory as occupied space.)

As the nVidia hardware supports dynamic block scheduling, meaning that if all the threads in a block finish earlier than the other threads in another block, then new blocks are sent into the execution queue. Thus it can be beneficial if the encoded signature database is multiplied and having columns containing 'checkpoints' of the signature encoding. For example, if a column is added to the encoded signature database with the encoded value of the first non-wildcard characters of the signature, then in case of mismatch, the further execution of the thread can be stopped. In case of all the threads stops earlier, then the block execution time is significantly reduced. Creating checkpoints is beneficial in the case of the head of the signature as the probability of later mismatch is eliminating character-by-character.

The signature search is probabilistic, but the chance of collision can be calculated. The size of the alphabet-position dictionary is *n***p*, where *n* is the possible number of characters and *p* is the possible number of positions. The signatures are represented using *m* bits, thus we can differentiate at most 2*^{m}* signatures. The number of signatures is *s*.

An upper bound of the estimation of the required dictionary size can be calculated in the following way. To represent the signatures completely collision free, each character of the alphabet is represented with log₂*n* bits, and according to the position the character coding is rotated.

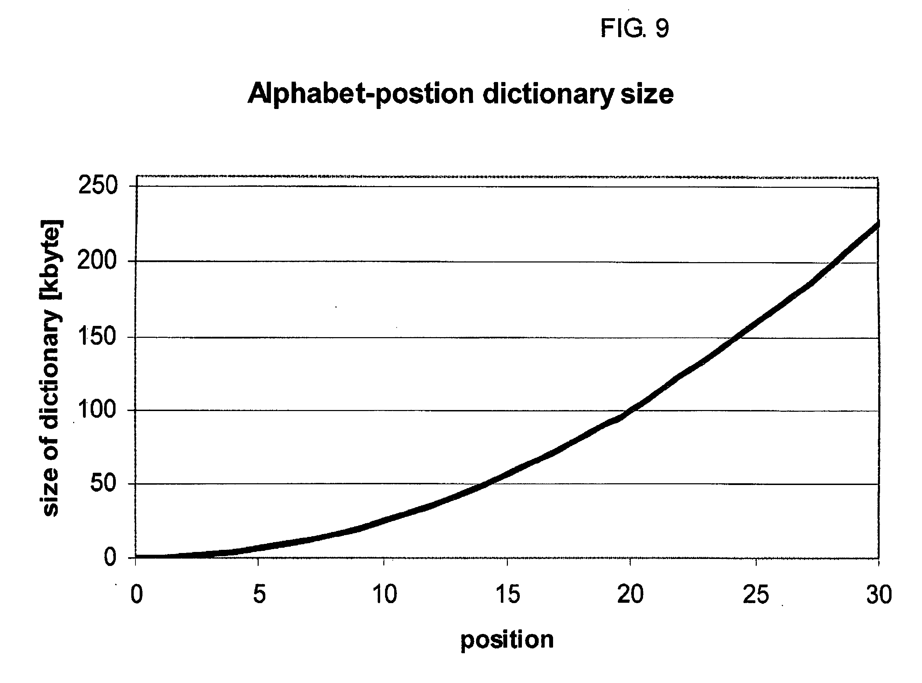

The size of one element of the dictionary is *p* log₂ *n*. The dictionary has *n***p* elements, thus the dictionary can be stored in *p²n* log₂ *n* bits of space. The size of alphabet-position dictionary in the function of the length of signatures is shown in Figure 9. With this estimation an alphabet dictionary with 256 characters fits into a 64 Kbyte memory if the signature length is at most 16 long.

If some collisions are also allowed, in reality the compression can be even higher. An example of a collision free alphabet-position dictionary is as follows:

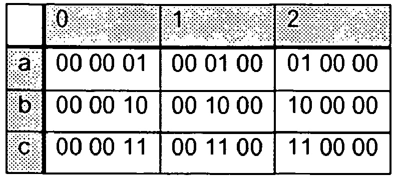

It will be appreciated that operation of one or more of the above-described components can be controlled by a program operating on the device or apparatus. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

## Claims

1. A method of encoding a signature string that is to be searched for within a search string, each character in the search string being one of n characters of an alphabet and each character in the signature string being one of the n characters or a wildcard character, the method comprising: encoding the signature string into a first part and a second part with reference to a dictionary comprising a plurality of codes, the first part identifying which, if any, characters of the signature string are wildcard characters, and the second part being formed by, for each character in the signature string that is not a wildcard character, retrieving a code from the dictionary based on the character and its position within the signature string, the dictionary holding a different code for each such character-position pairing, and combining the retrieved codes according to a predetermined logical operation to form the second part.

2. A method as claimed in claim 1, wherein the predetermined logical operation is an XOR operation.

3. A method as claimed in claim 1 or 2, wherein the codes held in the dictionary are allocated substantially randomly or pseudo-randomly to the various character-position pairings.

4. A method as claimed in claim 1, 2 or 3, wherein the first part is represented by a number of binary bits equal to the number of positions within the signature string, with each bit set to 0 or to 1 according to whether or not the character within the signature string at a corresponding position in the signature string is a wildcard character.

5. A method as claimed in any preceding claim, wherein the number of character positions in the signature string is the same as the number of character positions in the search string.

6. A method of searching for a signature string within a search string, each character in the search string being one of *n* characters of an alphabet and each character in the signature string being one of the *n* characters or a wildcard character, the method comprising: (a) receiving a version of the signature string encoded using a method as claimed in any preceding claim so as to comprise the first and second parts; (b) for each character of the search string whose position is not indicated by the first part of the encoded signature string as holding a wildcard character in the signature string, retrieving a code from the dictionary based on the character and its position within the search string; (c) combining the codes according to the predetermined logical operation to form an encoded search string; and (d) determining whether the signature string is present in the search string based on a comparison between the encoded search string and the second part of the encoded signature string.

7. A method of searching for a signature string within a plurality of search strings or a string made up of a plurality of such search strings, comprising using a corresponding plurality of parallel processing threads in a Single Instruction Multiple Data architecture processor, each parallel processing thread performing at least steps (a) to (c) of a method as claimed in claim 6 in relation to a different one of the plurality of search strings.

8. A method as claimed in claim 7, wherein the processor is a Graphical Processing Unit of a computer system also comprising a Central Processing Unit.

9. A method as claimed in claim 7 or 8, comprising holding the dictionary and the encoded version of the signature string in a memory space of the processor that is cached, and holding the search strings in a memory space of the processor that is not cached.

10. A method of classifying traffic from a communications or computer network, the traffic comprising a plurality of messages, and the method comprising, for each of at least one of the messages, using a method as claimed in any preceding claim to search within the message for a signature string associated with an application, and classifying the message as being associated with that application if the signature string is found in the search.

11. A method as claimed in any preceding claim, comprising performing the steps for a plurality of signature strings.

12. An apparatus for encoding a signature string that is to be searched for within a search string, each character in the search string being one of n characters of an alphabet and each character in the signature string being one of the n characters or a wildcard character, the apparatus comprising: means for encoding the signature string into a first part and a second part with reference to a dictionary comprising a plurality of codes, the encoding means comprising first means for forming the first part identifying which, if any, characters of the signature string are wildcard characters, and the second part being formed by, for each character in the signature string that is not a wildcard character, retrieving a code from the dictionary based on the character and its position within the signature string, the dictionary holding a different code for each such character-position pairing, and combining the retrieved codes according to a predetermined logical operation to form the second part.

13. An apparatus for searching for a signature string within a search string, each character in the search string being one of n characters of an alphabet and each character in the signature string being one of the n characters or a wildcard character, the apparatus comprising: (a) means for receiving a version of the signature string encoded using a method as claimed in any one of claims 1 to 11 so as to comprise the first and second parts; (b) means for, for each character of the search string whose position is not indicated by the first part of the encoded signature string as holding a wildcard character in the signature string, retrieving a code from the dictionary based on the character and its position within the search string; (c) means for combining the codes according to the predetermined logical operation to form an encoded search string; and (d) means for determining whether the signature string is present in the search string based on a comparison between the encoded search string and the second part of the encoded signature string.

14. A program for controlling an apparatus to perform a method as claimed in any one of claims 1 to 11.

15. A storage medium containing a program as claimed in claim 14.

## Patentansprüche

1. Verfahren zur Codierung einer Signaturzeichenfolge, nach der innerhalb einer Suchzeichenfolge gesucht werden soll, wobei jedes Zeichen in der Suchzeichenfolge eines von *n* Zeichen eines Alphabets ist und jedes Zeichen in der Signaturzeichenfolge eines der *n* Zeichen oder ein Stellvertreterzeichen ist, wobei das Verfahren umfasst: Codieren der Signaturzeichenfolge in einen ersten Teil und einen zweiten Teil unter Bezugnahme auf ein Wörterbuch, das eine Mehrzahl von Codes umfasst, wobei der erste Teil identifiziert, welche, wenn überhaupt, Zeichen der Signaturzeichenfolge Stellvertreterzeichen sind, und der zweite Teil für jedes Zeichen in der Signaturzeichenfolge, das kein Stellvertreterzeichen ist, durch Abrufen eines Codes aus dem Wörterbuch basierend auf dem Zeichen und seiner Position innerhalb der Signaturzeichenfolge gebildet wird, wobei das Wörterbuch einen verschiedenen Code für jede solche Zeichen-Positions-Paarung enthält, und Kombinieren der abgerufenen Codes gemäß einer vorbestimmten logischen Operation, um den zweiten Teil zu bilden.

2. Verfahren nach Anspruch 1, wobei die vorbestimmte logische Operation eine Exklusiv-ODER-Operation ist.

3. Verfahren nach Anspruch 1 oder 2, wobei die im Wörterbuch enthaltenen Codes den verschiedenen Zeichen-Positions-Paarungen im Wesentlichen zufällig oder pseudozufällig zugeordnet werden.

4. Verfahren nach Anspruch 1, 2 oder 3, wobei der erste Teil durch eine Anzahl von binären Bits gleich der Anzahl von Positionen innerhalb der Signaturzeichenfolge dargestellt wird, wobei jedes Bit je nachdem, ob das Zeichen innerhalb der Signaturzeichenfolge an einer entsprechenden Position in der Signaturzeichenfolge ein Stellvertreterzeichen ist oder nicht, auf 0 oder auf 1 gesetzt wird.

5. Verfahren nach einem der vorhergehenden Ansprüche, wobei die Anzahl von Zeichenpositionen in der Signaturzeichenfolge gleich wie die Anzahl von Zeichenpositionen in der Suchzeichenfolge ist.

6. Verfahren zur Suche nach einer Signaturzeichenfolge innerhalb einer Suchzeichenfolge, wobei jedes Zeichen in der Suchzeichenfolge eines von n Zeichen eines Alphabets ist und jedes Zeichen in der Signaturzeichenfolge eines der n Zeichen oder ein Stellvertreterzeichen ist, wobei das Verfahren umfasst: (a) Empfangen einer Version der Signaturzeichenfolge, die unter Verwendung eines Verfahrens nach einem der vorhergehenden Ansprüche codiert ist, um die ersten und zweiten Teile zu umfassen; (b) Abrufen für jedes Zeichen der Suchzeichenfolge, dessen Position durch den ersten Teil der codierten Signaturzeichenfolge nicht als ein Stellvertreterzeichen in der Signaturzeichenfolge enthaltend angezeigt wird, eines Codes aus dem Wörterbuch basierend auf dem Zeichen und seiner Position innerhalb der Suchzeichenfolge; (c) Kombinieren der Codes gemäß der vorbestimmten logischen Operation, um eine codierte Suchzeichenfolge zu bilden; und (d) Bestimmen, ob die Signaturzeichenfolge in der Suchzeichenfolge vorhanden ist, basierend auf einem Vergleich zwischen der codierten Suchzeichenfolge und dem zweiten Teil der codierten Signaturzeichenfolge.

7. Verfahren zur Suche nach einer Signaturzeichenfolge innerhalb einer Mehrzahl von Suchzeichenfolgen oder einer Zeichenfolge, die aus einer Mehrzahl von solchen Suchzeichenfolgen besteht, umfassend ein Verwenden einer entsprechenden Mehrzahl von parallelen Verarbeitungsthreads in einem Prozessor mit Einzelbefehl-Mehrfachdaten-Architektur, wobei jeder parallele Verarbeitungsthread mindestens Schritt (a) bis (c) eines Verfahrens nach Anspruch 6 in Bezug auf eine verschiedene der Mehrzahl von Suchzeichenfolgen ausführt.

8. Verfahren nach Anspruch 7, wobei der Prozessor eine Grafikverarbeitungseinheit eines Computersystems ist, der außerdem eine zentrale Verarbeitungseinheit umfasst.

9. Verfahren nach Anspruch 7 oder 8, umfassend ein Speichern des Wörterbuchs und der codierten Version der Signaturzeichenfolge in einem Speicherbereich des Prozessors, der zwischengespeichert wird, und Speichern der Suchzeichenfolgen in einem Speicherbereich des Prozessors, der nicht zwischengespeichert wird.

10. Verfahren zur Klassifizierung von Verkehr von einem Kommunikations- oder Computernetzwerk, wobei der Verkehr eine Mehrzahl von Nachrichten umfasst, und das Verfahren für jede von mindestens einer der Nachrichten ein Verwenden eines Verfahren nach einem der vorhergehenden Ansprüche zum Suchen innerhalb der Nachricht nach einer Signaturzeichenfolge, die mit einer Anwendung assoziiert ist, und Klassifizieren der Nachricht als mit dieser Anwendung assoziiert umfasst, wenn die Signaturzeichenfolge bei der Suche gefunden wird.

11. Verfahren nach einem der vorhergehenden Ansprüche, umfassend ein Ausführen der Schritte für eine Mehrzahl von Signaturzeichenfolgen.

12. Vorrichtung zum Codieren einer Signaturzeichenfolge, nach der innerhalb einer Suchzeichenfolge gesucht werden soll, wobei jedes Zeichen in der Suchzeichenfolge eines von n Zeichen eines Alphabets ist und jedes Zeichen in der Signaturzeichenfolge eines der *n* Zeichen oder ein Stellvertreterzeichen ist, wobei die Vorrichtung umfasst: Mittel zum Codieren der Signaturzeichenfolge in einen ersten Teil und einen zweiten Teil unter Bezugnahme auf ein Wörterbuch, das eine Mehrzahl von Codes umfasst, wobei die Codiermittel erste Mittel zum Bilden des ersten Teils, der identifiziert, welche, wenn überhaupt, Zeichen der Signaturzeichenfolge Stellvertreterzeichen sind, und des zweiten Teils, der für jedes Zeichen in der Signaturzeichenfolge, das kein Stellvertreterzeichen ist, durch Abrufen eines Codes aus dem Wörterbuch basierend
auf dem Zeichen und seiner Position innerhalb der Signaturzeichenfolge gebildet wird, wobei das Wörterbuch einen verschiedenen Code für jede solche Zeichen-Positions-Paarung enthält, und Kombinieren der abgerufenen Codes gemäß einer vorbestimmten logischen Operation, um den zweiten Teil zu bilden, umfasst.

13. Vorrichtung zum Suchen nach einer Signaturzeichenfolge innerhalb einer Suchzeichenfolge, wobei jedes Zeichen in der Suchzeichenfolge eines von n Zeichen eines Alphabets ist und jedes Zeichen in der Signaturzeichenfolge eines der *n* Zeichen oder ein Stellvertreterzeichen ist, wobei die Vorrichtung umfasst: (a) Mittel zum Empfangen einer Version der Signaturzeichenfolge, die unter Verwendung eines Verfahrens nach einem der Ansprüche 1 bis 11 codiert ist, um die ersten und zweiten Teile zu umfassen; (b) Mittel zum Abrufen für jedes Zeichen der Suchzeichenfolge, dessen Position durch den ersten Teil der codierten Signaturzeichenfolge nicht als ein Stellvertreterzeichen in der Signaturzeichenfolge enthaltend angezeigt wird, eines Codes aus dem Wörterbuch basierend auf dem Zeichen und seiner Position innerhalb der Suchzeichenfolge; (c) Mittel zum Kombinieren der Codes gemäß der vorbestimmten logischen Operation, um eine codierte Suchzeichenfolge zu bilden; und (d) Mittel zum Bestimmen, ob die Signaturzeichenfolge in der Suchzeichenfolge vorhanden ist, basierend auf einem Vergleich zwischen der codierten Suchzeichenfolge und dem zweiten Teil der codierten Signaturzeichenfolge.

14. Programm zum Steuern einer Vorrichtung zum Durchführen eines Verfahrens nach einem der Ansprüche 1 bis 11.

15. Speichermedium, das ein Programm nach Anspruch 14 enthält.

## Revendications

1. Procédé de codage d'une chaîne de signature qui doit être recherchée à l'intérieur d'une chaîne de recherche, chaque caractère dans la chaîne de recherche étant un de n caractères d'un alphabet et chaque caractère dans la chaîne de signature étant un des n caractères ou un caractère générique, le procédé comprenant de : coder la chaîne de signature en une première partie et une seconde partie en se référant à un dictionnaire comprenant une pluralité de codes, la première partie indiquant quels, le cas échéant, caractères de la chaîne de signature sont des caractères génériques, et la seconde partie étant formée en, pour chaque signature dans la chaîne de signature qui n'est pas un caractère générique, extrayant un code du dictionnaire sur la base du caractère et de sa position à l'intérieur de la chaîne de signature, le dictionnaire détenant un code différent pour chaque telle paire caractère-position, et en combinant les codes extraits selon une opération logique prédéterminée pour former la seconde partie.

2. Procédé selon la revendication 1, dans lequel l'opération logique prédéterminée est une opération OU exclusif.

3. Procédé selon les revendications 1 ou 2, dans lequel les codes détenus dans le dictionnaire sont allouées substantiellement aléatoirement ou pseudo-aléatoirement aux diverses paires caractère-position.

4. Procédé selon les revendications 1,2 ou 3, dans lequel la première partie est représentée par un nombre de bits binaires égal au nombre de positions à l'intérieur de la chaîne de signature, avec chaque bit réglé sur 0 ou sur 1 selon ou non que le caractère à l'intérieur de la chaîne de signature à une position correspondante dans la chaîne de signature est un caractère générique.

5. Procédé selon une quelconque des revendications précédentes, dans lequel le nombre de positions de caractère dans la chaîne de signature est le même que le nombre de positions de caractère dans la chaîne de caractère.

6. Procédé de recherche d'une chaîne de signature à l'intérieur d'une chaîne de recherche, chaque caractère dans la chaîne de recherche étant un de n caractères d'un alphabet et chaque caractère dans la chaîne de signature étant un des n caractères ou un caractère générique, le procédé comprenant due : (a) recevoir une version de la chaîne de signature codée en utilisant un procédé selon une quelconque des revendications précédentes de manière à comprendre la première et la seconde parties ; (b) pour chaque caractère de ladite chaîne de recherche dont la position n'est pas indiquée par la première partie de la chaîne de signature codée comme détenant un caractère générique dans la chaîne de signature, extraire un code du dictionnaire sur la base du caractère et de sa position à l'intérieur de la chaîne de recherche ; (c) combiner les codes selon l'opération logique prédéterminée pour former une chaîne de recherche codée ; et (d) déterminer si la chaîne de signature est présente dans la chaîne de recherche sur la base d'une comparaison entre la chaîne de recherche codée et la seconde partie de la chaîne de signature codée.

7. Procédé de recherche d'une chaîne de signature à l'intérieur d'une pluralité de chaînes de recherche d'une chaîne composée d'une pluralité de telles chaînes de recherche, comprenant d'utiliser une pluralité correspondante de fils de traitement parallèles dans un processeur à architecture de données multiples pour instruction unique, chaque fil de traitement parallèle effectuant au moins les étapes (a) à (c) d'un procédé selon la revendication 6 relativement à une chaîne différente de la pluralité de chaînes de recherche.

8. Procédé selon la revendication 7, dans lequel le processeur est une unité de traitement graphique d'un système informatique comprenant aussi une unité de traitement centrale.

9. Procédé selon les revendications 7 ou 8, comprenant de détenir le dictionnaire et la version codée de la chaîne de signature dans un espace de mémoire du processeur qui est en antémémoire, et détenir les chaînes de recherche dans un espace de mémoire du processeur qui n'est pas en antémémoire.

10. Procédé de classification du trafic provenant d'un réseau informatique ou de communication, le trafic comprenant une pluralité de messages, et le procédé comprenant, pour chacun d'au moins un des messages, d'utiliser un procédé selon une quelconque des revendications précédentes pour rechercher à l'intérieur du message une chaîne de signature associée à une application, et classifier le message comme étant associé à cette application si la chaîne de signature est trouvée lors de la recherche.

11. Procédé selon une quelconque des revendications précédentes, comprenant d'exécuter les étapes pour une pluralité de chaînes de signature.

12. Dispositif de codage d'une chaîne de signature qui doit être recherchée à l'intérieur d'une chaîne de recherche, chaque caractère dans la chaîne de recherche étant un de n caractères d'un alphabet et chaque caractère dans la chaîne de signature étant un de n caractères ou un caractère générique, le dispositif comprenant : un moyen de codage de la chaîne de signature en une première partie et une seconde partie en se référant à un dictionnaire comprenant une pluralité de codes, le moyen de codage comprenant un premier moyen pour former la première partie identiques quels, le cas échéant, caractères de la chaîne de signature sont des caractères génériques, et la seconde partie étant formée en, pour chaque caractère dans la chaîne de signature qui n'est pas un caractère générique, extrayant un code de la dictionnaire sur la base du caractère et de sa position à l'intérieur de la chaîne de signature, le dictionnaire détenant un code différent pour chaque telle paire caractère-position, et en combinant les codes extraits selon une opération logique prédéterminée pour former la seconde partie.

13. Dispositif de recherche d'une chaîne de signature à l'intérieur d'une chaîne de recherche, chaque caractère dans la chaîne de recherche étant un de n caractères d'un alphabet et chaque signature dans la chaîne de signature étant un des n caractères ou un caractère générique, le dispositif comprenant : (a) un moyen de réception d'une version de la chaîne de signature codée en utilisant un procédé selon une quelconque des revendications 1 à 11 de manière à comprendre la première et la seconde partie ; (b) un moyen, pour chaque caractère de la chaîne de recherche dont la position n'est pas indiquée par la première partie de la chaîne de signature codée comme détenant un caractère générique dans la chaîne de signature, extrayant un code du dictionnaire sur la base du caractère et de sa position à l'intérieur de la chaîne de recherche ; (c) un moyen de combinaison des codes selon l'opération logique prédéterminée pour former une chaîne de recherche codée ; et (d) un moyen de détermination si la chaîne de signature est présente dans la chaîne de recherche sur la base d'une comparaison entre la chaîne de recherche codée et la seconde partie de la chaîne de signature codée.

14. Programme de commande d'un dispositif pour mettre en oeuvre un procédé selon une quelconque des revendications 1 à 11.

15. Support de mémorisation contenant un programme selon la revendication 14.
